# EUROPÄISCHE PATENTANMELDUNG

(11) **EP 1 526 314 A1**
(43) Veröffentlichungstag der Anmeldung: **27.04.2005**
(21) Anmeldenummer: 04024992.2
(22) Anmeldetag: 20.10.2004
(51) Int. Cl.: F16L 21/06

(54) **Rohrverbindungsschelle**

(30) Priorität: 21.10.2003 DE 10348817
(71) Anmelder: Gebr. Möck GmbH & Co. KG, 72072 Tübingen (DE)
(72) Erfinder: Möck, Thomas, 72072 Tübingen (DE)
(74) Vertreter: Kohler Schmid Möbus

(57) **Zusammenfassung**

Eine Rohrverbindungsschelle (10) weist Vorrichtungen (18) auf, die sich beim Anziehen der Schelle (10) über den Umfang des Rohrendes (11) gesehen gleichmäßig stark in der Außenoberfläche (20) des Rohrendes (11) verkrallen. Wird die Rohrverbindungsschelle (10) über zwei Rohrenden liegend angezogen, so verkrallen sich die dafür vorgesehenen Vorrichtungen in den jeweiligen Rohrenden und halten diese Rohrenden dauerhaft und fluiddicht zusammen.

## Beschreibung

Die Erfindung betrifft eine Rohrverbindungsschelle von zwei miteinander zu verbindenden Rohrenden, insbesondere bei Hochdruckanwendungen.

Eine derartige Rohrverbindungsschelle ist durch das deutsche Gebrauchsmuster 200 22 710.6 bekannt geworden.

Bei der bekannten Rohrverbindungsschelle sind auf der Innenseite der Schelle Vorrichtungen vorgesehen, die sich beim Anziehen der Schelle in die Oberfläche beider Rohrenden verkrallen.

Wird die bekannte Rohrschelle zum Verbinden von dünnwandigen Rohrenden oder von Rohrenden aus leicht verformbaren Materialien eingesetzt, so können sich die zu verbindenden Rohrenden unter dem Anzugsdruck der Rohrschelle verformen und dies kann zu einer Leckage an der Verbindungsstelle der zu verbindenden Rohrenden führen und dies umso mehr, wenn das in den zu verbindenden Rohren geführte Fluid (Flüssigkeit oder Gas) unter Druck durch diese Rohre strömt. Eine Beschädigung der zu verbindenden Rohrenden durch bleibende Deformationen ist nicht ausgeschlossen.

Aufgabe der vorliegenden Erfindung ist es, bekannte Rohrschellenverbindungen derart weiterzubilden, dass sie im angezogenen Zustand dauerhaft miteinander zu verbindende Rohrenden, mit auch geringen Wandstärken, fluiddicht zusammenhalten und einer axialen Verschiebung der Rohrenden entgegenwirken.

Diese Aufgabe wird erfindungsgemäß dadurch gelöst, dass auf der Innenseite der Schelle Vorrichtungen vorgesehen sind, die sich beim Anziehen der Schelle über den Umfang der Rohrenden gesehen gleichmäßig stark in der Außenoberfläche beider Rohrenden verkrallen.

Die erfindungsgemäße Rohrverbindungsschelle hat damit den wesentlichen Vorteil, dass eine Druckbeaufschlagung über den Umfang der beiden Rohrenden auch bei stark angezogenen Schellen sehr gleichmäßig erfolgen kann. Die Vorrichtungen zum Verkrallen sind so ausgebildet, dass die zum Verkrallen notwendigen Radialkräfte gleichmäßig über den Umfang der Rohrenden verteilt in die Außenoberflächen der Rohrenden eingeleitet werden. Verspannungen und Verformungen der Rohrenden im Bereich der Schelle werden vermieden und dies auch dann, wenn Rohrschellen sehr stark angezogen werden müssen, um beispielsweise Fluiddrücke im Innenraum der Rohre von 50 - 70 bar abzudichten. Durch die über den Umfang der Rohrenden gesehene homogene Verkrallung wird auch eine axiale Verschiebung der Rohrenden relativ zueinander dauerhaft verhindert.

In bevorzugter Ausgestaltung der Erfindung ist die Schelle zur Verbindung ineinander gesteckter Rohrenden oder zweier stumpf aneinander stoßender Rohrenden vorgesehen. Dies hat den Vorteil, dass die erfindungsgemäße Rohrverbindungsschelle sowohl bei gemufften Verbindungen, stumpf aneinander stoßenden Rohrverbindungen oder bei beliebig ineinander greifenden Rohrendverbindungen eingesetzt werden kann. Bei ineinander gesteckten Rohrenden wird zwischen den Rohrenden ein Dichtring angeordnet und die erfindungsgemäße Rohrverbindungsschelle kann ohne ein weiteres Dichtmittel eingesetzt werden. Bei stumpf aneinander grenzenden Rohrenden ist auf der Innenseite der erfindungsgemäßen Rohrverbindungsschelle noch ein Dichtring eingesetzt, der die Rohrverbindungsstelle abdichtet, indem die Rohrverbindungsschelle zusammengezogen wird.

In weiterer Ausgestaltung der Erfindung sind die Vorrichtungen von einer ersten und zweiten Flanke der Schelle und/oder von Ringabschnitten gebildet, die sich mit ihrem inneren Rand in die Außenoberfläche der Rohrenden verkrallen.

Dies hat den Vorteil, dass je nach Bedarf die abgewinkelten Flanken eines Schellenbandes oder alternativ bzw. gemeinsam Ringabschnitte im Innenbereich der Rohrschelle angeordnet werden, die sich im angezogenen Zustand der Schelle in den Außenoberflächen der Rohrenden verkrallen. Eine derartig erfindungsgemäß angezogene Rohrschelle lässt sich auf den Rohrenden nicht mehr axial verschieben und hält diese Rohrenden dauerhaft und fluiddicht zusammen.

Weiterhin ist es vorteilhaft, wenn die ersten und zweiten Flanken und/oder die Ringabschnitte zur Schellenmitte hin geneigt an der Schelle ausgebildet sind. Dies hat den Vorteil, dass insbesondere bei einer gemufften Verbindung von Rohrenden eine axiale Verschiebung dieser Rohrenden relativ zueinander mit einer erhöhten Sicherheit verhindert wird.

In einer anderen Ausführungsform der erfindungsgemäßen Rohrverbindungsschelle sind Stützprofile auf der Innenseite der Schelle zwischen den ersten und zweiten Flanken und/oder zwischen den Ringabschnitten vorgesehen. Durch diese Stützprofile wird die erfindungsgemäße Rohrverbindungsschelle weiter versteift und die zum Schellenband schräg gestellten Ringabschnitte bzw. Flanken behalten auch dauerhaft ihre vorgegebene Schrägstellung, wenn sie druckbelastet werden.

In weiterer Ausgestaltung der Erfindung weist die Schelle an ihren freien Enden Befestigungsmittel zum Öffnen, Verschließen und Anziehen der Schelle, insbesondere Schrauben auf und an den ersten und zweiten Flanken, den freien Enden etwa gegenüberliegend, sind Schlitze oder Aussparungen ausgebildet. Dies hat den Vorteil, dass eine derartige Schelle mit einfachen Handgriffen um zu verbindende Rohrenden gelegt werden kann, indem man das Schellenband scharnierartig so stark weitet, dass es über den Außenumfang von zu verbindenden Rohrenden geschoben oder gelegt werden kann. Schlitze und/oder Aussparungen erleichtern diese Aufweitung. Zum Schließen wird das Schellenband am Außenumfang der Rohrenden anliegend zusammengedrückt und über bekannte Schraubverbindungen zusammengezogen.

Bevorzugt ändern sich die ersten und zweiten Flanken und/oder die Ringabschnitte in der Höhe zwischen den Schlitzen und/oder den Aussparungen und den freien Enden der Schelle, indem sich die Höhe der ersten und zweiten Flanken und/oder der Ringabschnitte, vom Schlitz oder der Aussparung ausgehend, auf ein Maximum vergrößert und sich die Höhe anschließend bis zu den freien Enden der Schelle hin wieder verkleinert. Dies hat den Vorteil, dass sich beim Anziehen einer erfindungsgemäßen Rohrverbindungsschelle die Flanken bzw. die Ringabschnitte gleichmäßig stark über den Umfang verteilt in den Außenoberflächen der Rohrenden verkrallen und somit auch bei einem verstärkten Radialdruck keine Beschädigungen an den zu verbindenden Rohrenden erzeugen.

Bei einer weiteren Ausführungsform der erfindungsgemäßen Rohrverbindungsschelle ist das Maximum nach einem Winkel von α = 90° auf einem Halbkreis der Schelle zwischen dem Schlitz oder der Aussparung und einem freien Ende erreicht. Mit dieser einfachst auszuführenden Maßnahme kann eine gleichmäßige Druckverteilung auf die Außenoberflächen der zu verbindenden Rohrteile über den Umfang dieser Rohrteile gesehen ausgeübt werden.

Eine effektive und sichere Verkrallung wird dann erreicht, wenn der innere Rand der ersten und zweiten Flanken und/oder der innere Rand der Ringabschnitte mit über dem Umfang verteilten Vorsprüngen versehen ist. Die Vorsprünge können als Zähne mit verschiedensten Konturen ausgebildet sein und können somit mehr oder weniger stark punktförmig in die Außenoberflächen der zu verbindenden Rohrenden eindringen.

Weitere Vorteile der Erfindung ergeben sich aus der folgenden Figurenbeschreibung.

Die erfindungsgemäße Rohrverbindungsschelle ist besonders für druckbeaufschlagte Rohre geeignet und kann Rohrverbindungen dauerhaft absichern, die mit Innendrücken oder Sicherheitsdrücken von 50 bis 70 bar druckbeaufschlagt werden. Deshalb sind die erfindungsgemäßen Rohrverbindungsschellen besonders für Feuerlöschleitungen geeignet, wie sie beispielsweise auf Schiffen eingesetzt werden. Mit der erfindungsgemäßen Rohrverbindungsschelle lassen sich dünnwandige Rohre miteinander verbinden, deren Wandstärken auch kleiner als 5 mm sind. Es versteht sich, dass die erfindungsgemäße Rohrverbindungsschelle auch für zu verbindende Rohrenden eingesetzt werden kann, deren Wandstärken größer als 5 mm sind. Die erfindungsgemäßen Vorsprünge können sich über einen Halbkreis der Ringabschnitte gesehen in ihrer Höhe beispielsweise halbieren, d. h. ein außen liegender Vorsprung weist beispielsweise nur die halbe Höhe auf, wie ein Vorsprung, der im Halbkreis am Winkel von 90° ausgebildet ist. Die Größenveränderung der Vorsprünge von einem Winkel α = 0° bis zu einem Winkel von α = 90° muss nicht kontinuierlich sich vergrößernd erfolgen, sondern die Vergrößerung der Vorsprünge kann an einzelne Einsatzzwecke angepasst sein. So können aneinander grenzende Vorsprünge auch eine unterschiedliche Höhe derart aufweisen, dass jeweils ein einem Vorsprung benachbarter Vorsprung dieselbe Höhe aufweist, während der von diesen Vorsprüngen begrenzte Vorsprung über diese Vorsprünge hinaus ragt oder gegenüber diesen Vorsprüngen verkürzt ist.

Eine Rohrverbindungsschelle weist Vorrichtungen auf, die sich beim Anziehen der Schelle über den Umfang des Rohrendes gesehen unterschiedlich stark in der Außenoberfläche des Rohrendes verkrallen. Wird die Rohrverbindungsschelle über zwei Rohrenden liegend angezogen, so verkrallen sich die dafür vorgesehenen Vorrichtungen in den jeweiligen Rohrenden und halten diese Rohrenden dauerhaft und fluiddicht zusammen.

### Es zeigt:

- Fig. 1: eine erfindungsgemäße Rohrverbindungsschelle, wie sie ein im Schnitt dargestelltes Rohr umgreift;

- Fig. 2: einen Ausschnitt aus einer Wandung eines Rohrendes und aus einer Vorrichtung, die sich in der Außenoberfläche des Rohres verkrallt;
- Fig. 3: einen Schnitt durch zwei gemuffte Rohrenden mit Teilansichten einer erfindungsgemäßen Rohrschelle.

Die in den Figuren dargestellten Ausführungsbeispiele sind nicht maßstäblich zu verstehen und zeigen die erfindungsgemäße Rohrverbindungsschelle in Einzelteilen so, dass die erfindungswesentlichen Merkmale der Rohrschelle zu sehen sind.

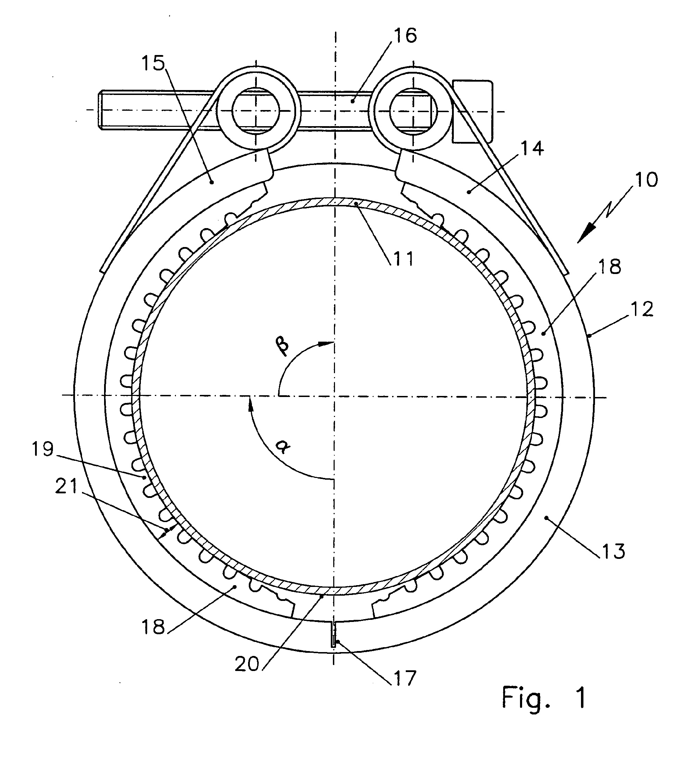

Fig. 1 zeigt mit 10 eine Rohrverbindungsschelle, wie sie ein Rohrende 11, das im Schnitt dargestellt ist, umgreift. Die Rohrverbindungsschelle 10 ist aus einem Schellenband 12 gebildet, das beidseits abgewinkelte Flanken aufweist. In der Fig. 1 ist eine erste Flanke 13 gezeigt und dieser ersten Flanke 13 gegenüberliegend ist eine weitere abgewinkelte Flanke ausgebildet, die durch die erste Flanke 13 verdeckt ist. Das Schellenband 12 weist freie Enden 14, 15 auf, an denen Befestigungsmittel, wie eine Schraube 16, befestigt sind. Über die Schraube 16 kann die Rohrverbindungsschelle 10 geöffnet oder zusammengezogen werden. Wird die Rohrverbindungsschelle 10 geöffnet und soll sie geweitet um ein Rohrende 11 gelegt werden, so ist ein Schlitz 17 vorteilhaft, der ein Auseinanderklappen der Rohrschellenhälften um den Schlitz 17 erleichtert.

Erste Ringabschnitte 18 sind in das Schellenband 12 eingelegt und mit dem Schellenband 12 fest verbunden. Die ersten Ringabschnitte 18 überragen die erste Flanke 13 und liegen über Vorsprüngen 19, die am inneren Rand der ersten Ringabschnitte 18 ausgebildet sind, auf einer Außenoberfläche 20 des Rohrendes 11 auf. Die Vorsprünge 19 verkrallen sich im angezogenen Zustand der Rohrverbindungsschelle 10 in der Außenoberfläche 20 des Rohrendes 11 und dies über den Umfang des Rohres 11 gesehen unterschiedlich stark. Die Vorsprünge 19 weisen über den Umfang der Ringabschnitte 18 gesehen eine unterschiedliche Höhe 21 auf. Die Höhe 21 eines Vorsprunges 19 ist nahe des Schlitzes 17 und in der Nähe der freien Enden 14 und 15 geringer als im übrigen Bereich der Rohrabschnitte 18. Mit zunehmendem Winkel α, der in Pfeilrichtung sich bis auf 90° vergrößert, nehmen auch die Vorsprünge 19 in ihrer Höhe zu. Mit einem abnehmenden Winkel β, der sich in Pfeilrichtung verkleinert, nimmt auch die Höhe der Vorsprünge 19 ab. Die Vorsprünge 19 sind erfindungsgemäß so ausgebildet, dass sie sich bei angezogener Rohrverbindungsschelle 10 gleichmäßig stark über den Umfang eines Rohrendes 11 verteilt in die Außenoberfläche 20 eindrücken.

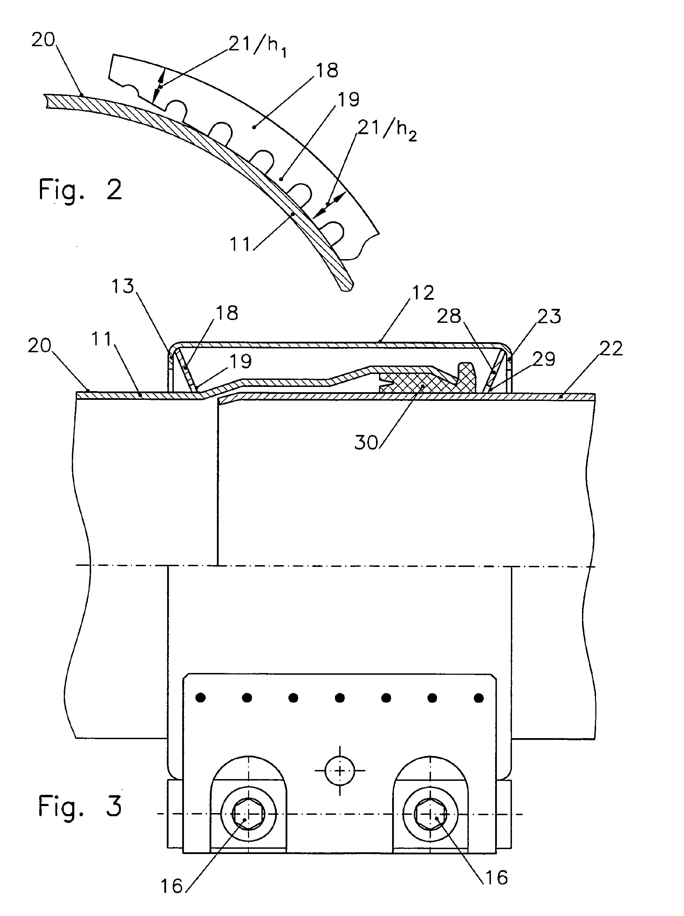

Fig. 2 zeigt einen Ausschnitt von einem ersten Rohrende 11 und einen Ausschnitt von einem ersten Ringabschnitt 18, wie er an der Außenoberfläche 20 anliegt. Die Vorsprünge 19 verkrallen sich in der Außenoberfläche 20, sodass zu verbindende Rohrenden unverrückbar, und dies auch unter Druck, zusammengehalten werden.

Fig. 3 zeigt ein Rohrende 11, wie es mit einem Rohrende 22 verbunden ist. Die Rohrenden 11, 22 überlappen sich und sind ineinander gesteckt. Von dem Schellenband 12 sind neben der ersten Flanke 13 auch eine zweite Flanke 23 gezeigt. Die erste Flanke 13 und die zweite Flanke 23 sind rechtwinklig vom Schellenband 12 abgewinkelt. Im Schellenband 12 sind schräg gestellt ein erster Ringabschnitt 18 und ein zweiter Ringabschnitt 28 angeordnet. Diese Ringabschnitte 18, 28 sind so bemessen und gegenüber der Grundfläche des Schellenbandes 12 schräg gestellt, dass sie im angezogenen Zustand der Rohrverbindungsschelle 10 in die Außenoberfläche 20 eindringen können. Am inneren Rand der Ringabschnitte 18, 28 sind Vorsprünge 19, 29 ausgebildet, die sich mit der Außenoberfläche 20 mehr oder weniger stark verkrallen, je nachdem, wie stark die Rohrschelle über die Schrauben 16 angezogen wird. Die Rohrenden 11, 22 sind über einen Dichtungsring 30 gegeneinander abgedichtet, sodass die Rohrverbindungsschelle 10 keine weiteren Dichtungsmittel aufweisen muss. Zum Abdichten dieser Rohrverbindungsschelle sind keine weiteren Dichtungsmittel erforderlich.

## Patentansprüche

1. Rohrverbindungsschelle von zwei miteinander zu verbindenden Rohrenden (11; 22) insbesondere für Hochdruckanwendungen, **dadurch gekennzeichnet, dass** auf der Innenseite der Schelle (10) Vorrichtungen (18, 28) vorgesehen sind, die sich beim Anziehen der Schelle (10), über den Umfang der Rohrenden (11, 22) gesehen, gleichmäßig stark in der Außenoberfläche (20) beider Rohrenden (11; 22) verkrallen.

2. Rohrverbindungsschelle nach Anspruch 1, **dadurch gekennzeichnet, dass** die Schelle (10) zur Verbindung ineinander gesteckter Rohrenden (11; 22) oder zweier stumpf aneinander stoßender Rohrenden vorgesehen sind.

3. Rohrverbindungsschelle nach Anspruch 1 oder 2, **dadurch gekennzeichnet, dass** die Vorrichtungen (18; 28) von einer ersten und zweiten Flanke (13; 23) der Schelle (10) und/oder von Ringabschnitten (18; 28) gebildet sind, die sich mit ihrem inneren Rand in den Außenoberflächen (20) der Rohrenden (11; 22) verkrallen.

4. Rohrverbindungsschelle nach Anspruch 3, **dadurch gekennzeichnet, dass** die ersten und zweiten Flanken (13; 23) und/oder die Ringabschnitte (18; 28) zur Schellenmitte hin geneigt an der Schelle (10) ausgebildet sind.

5. Rohrverbindungsschelle nach Anspruch 3 oder 4, **dadurch gekennzeichnet, dass** Stützprofile auf der Innenseite der Schelle (10) zwischen den ersten und zweiten Flanken (13; 23) und/oder zwischen den Ringabschnitten (18; 28) vorgesehen sind.

6. Rohrverbindungsschelle nach einem der Ansprüche 3 bis 5, **dadurch gekennzeichnet, dass** die Schelle (10) an ihren freien Enden (14, 15) Befestigungsmittel zum Öffnen, Verschließen und Anziehen der Schelle (10), insbesondere Schrauben (16) aufweist und an den ersten und zweiten Flanken (13; 23), den freien Enden (14, 15) etwa gegenüberliegend, Schlitze (17) oder Aussparungen ausgebildet sind.

7. Rohrverbindungsschelle nach Anspruch 6, **dadurch gekennzeichnet, dass** sich die ersten und zweiten Flanken (13; 23) und/oder die Ringabschnitte (18; 28) in der Höhe (21) zwischen den Schlitzen (17) und/oder den Aussparungen und den freien Enden (14, 15) ändern, indem sich die Höhe (21) der ersten und zweiten Flanken (13; 23) und/oder der Ringabschnitte (18; 28) vom Schlitz (17) oder der Aussparung ausgehend, auf ein Maximum vergrößert und sich die Höhe (21) anschließend bis zu den freien Enden (14, 15) hin verkleinert.

8. Rohrverbindungsschelle nach Anspruch 7, **dadurch gekennzeichnet, dass** das Maximum nach einem Winkel von α = 90° auf einem Halbkreis der Schelle (10) zwischen dem Schlitz (17) oder der Aussparung und einem freien Ende (15) erreicht ist.

9. Rohrverbindungsschelle nach einem der Ansprüche 3 bis 8, **dadurch gekennzeichnet, dass** der innere Rand der ersten und zweiten Flanken (13; 23) und/oder der innere Rand der Ringabschnitte (18; 28) mit über dem Umfang verteilten Vorsprüngen (19) versehen ist.
